# EUROPEAN PATENT SPECIFICATION

(11) **EP 4 461 615 B1**
(45) Date of publication and mention of the grant of the patent: **31.12.2025**
(21) Application number: 24174280.8
(22) Date of filing: 06.05.2024
(51) Int. Cl.: B60W 50/16, B60W 60/00

(54) **VEHICLE FOR PERFORMING MINIMAL RISK MANEUVER AND METHOD OF OPERATING THE SAME**
FAHRZEUG ZUR DURCHFÜHRUNG EINES MANÖVERS MIT MINIMALEM RISIKO UND VERFAHREN ZUM BETRIEB DAVON
VÉHICULE POUR EFFECTUER UNE MANOEUVRE À RISQUE MINIMAL ET SON PROCÉDÉ DE FONCTIONNEMENT

(30) Priority: 09.05.2023 KR 20230060040; 22.04.2024 KR 20240053414
(43) Date of publication of application: 13.11.2024
(73) Proprietor: HYUNDAI MOTOR COMPANY, Seoul 06797 (KR); Kia Corporation, Seocho-gu Seoul 06797 (KR)
(72) Inventor: KIM, Seung Hwan, 15021 Gyeonggi-do (KR); JANG, Chan Jong, 18270 Hwaseong-si (KR); MIN, Young bin, 47515 Busan (KR); PARK, Jong Sung, 18237 Gyeonggi-do (KR)
(74) Representative: Hoffmann Eitle

(56) References cited:
- EP-A1- 3 296 976
- WO-A1-2022/092682
- US-A1- 2015 006 012
- US-A1- 2017 008 528
- US-A1- 2022 144 307
- US-A1- 2023 399 018

## Description

### BACKGROUND OF THE INVENTION

### Field of the Invention

Various embodiments of the invention relate to a vehicle for performing minimum risk maneuvers that is capable of conducting the human-machine interface (HMI) process for external and internal notification about the minimum risk maneuvers and a method of operating the same.

### Description of the Related Art

Recently, advanced driver assistance systems (ADAS) have been developed to aid drivers. ADAS encompasses a variety of sub-technologies and can provide users with considerable convenience. These ADAS systems are also referred to as autonomous driving or automated driving systems (ADS).

In the event of unforeseen accidents or malfunctions during autonomous driving, a minimal risk maneuvering function should be performed to minimize the risk of collision with surrounding vehicles and reach a minimum risk state in a short period of time, and it is necessary to inform relevant parties both externally and internally to prevent accidents in advance. WO 2022/092682 A1 relates to a vehicle for performing a minimal risk maneuver and a method for operating the same.
US 2017/008528 A1 relates to an emergency vehicle control device that, when an emergency vehicle stop switch is operated for an operation time threshold value or longer in a state where automatic vehicle stop control is not executed, determines that the automatic vehicle stop control is intended to be executed.

### SUMMARY OF THE INVENTION

In autonomous vehicles, requirements are defined for activating the internal information HMI function to notify the vehicle user when the minimum risk maneuvering function is initiated, and for activating the external information HMI function to notify surrounding vehicles that the minimum risk maneuvering function is initiated. However, uncertainty remains regarding when and how the initiated HMI function should be terminated.

The present invention is defined by the autonomous driving vehicle according to independent claim 1 and the method of operating an autonomous driving vehicle according to independent claim 7. Optional preferred features are recited in the dependent claims. The various embodiments of the invention are capable of providing a vehicle control method that divides the HMI functionality, which informs the operation of the minimal risk maneuvering function, into external and internal interfaces, allowing for different termination processes to be utilized.

The technical objects of the invention are not limited to the aforesaid, and other objects not described herein with be clearly understood by those skilled in the art from the descriptions below.

The processor, upon the vehicle transitioning to the TD state, may provide the user with a first notification requesting the transfer of control of the vehicle to the driver.

The processor, after a predetermined time elapses since the provision of first notification, provides the user with a second notification requesting the transfer of control of the vehicle to the user, wherein the second notification may have a stronger notification intensity compared to the first notification.

The first notification and the second notification may include at least one of an auditory alert, a seat belt haptic feedback, and a pop-up display.

The processor may determine to execute the minimal risk maneuver via the TD state based on failing acquisition of the information necessary for autonomous driving of the vehicle.

The processor may determine to execute the minimal risk maneuver via the TD state based on failing acquisition of the information necessary for autonomous driving of the vehicle, and determine to execute the minimal risk maneuver immediately based on detecting a physical malfunction related to the autonomous driving of the vehicle.

The processor may determine whether the minimal risk maneuver is terminated and automatically clears the indication and the alert when the minimal risk maneuver is normally terminated.

The processor may determine that the minimal risk maneuver is terminated when the vehicle has stopped and remains stationary.

The method may further include providing, upon the vehicle transitioning to the TD state, the user with a first notification requesting the transfer of control of the vehicle to the driver.

The method may further include providing, after a predetermined time elapses since the provision of first notification, the user with a second notification requesting the transfer of control of the vehicle to the user. The second notification may have a stronger notification intensity compared to the first notification.

The determining of whether to execute the minimal risk maneuver after the vehicle transitions through a transition demand (TD) state or immediately may include determining to execute the minimal risk maneuver via the TD state based on failing acquisition of the information necessary for autonomous driving of the vehicle.

The determining of whether to execute the minimal risk maneuver after the vehicle transitions through a transition demand (TD) state or immediately may include determining to execute the minimal risk maneuver immediately based on detecting a physical malfunction related to the autonomous driving of the vehicle.

The method may further include determining whether the minimal risk maneuver is terminated, and automatically clearing the indication and the alert when the minimal risk maneuver is terminated.

The determining whether the minimal risk maneuver is terminated may include determining that the minimal risk maneuver is terminated when the vehicle has stopped and remains stationary.

### BRIEF DESCRIPTION OF THE DRAWINGS

FIG. 1 is a block diagram illustrating a vehicle according to various embodiments of this document;
FIG. 2A is a diagram the operation of an autonomous vehicle in an event of a longitudinal fault at level 1 or 2 according to an embodiment;
FIG. 2B is a diagram illustrating the operation of an autonomous vehicle in an event of a longitudinal fault at levels 3 to 5 according to another embodiment;
FIG. 3 is a diagram illustrating vehicle state-specific minimum risk maneuver (MRM) strategies according to various embodiments of this document;
FIG. 4 is a diagram illustrating exemplary screen layout on a display when a highway driving pilot (HDP) function is activated;
FIG. 5 is a flowchart illustrating the process of performing an MRM strategy in a vehicle according to various embodiments of this document;
FIG. 6 is a flowchart illustrating the process of perform an MRM strategy in a vehicle according to various embodiments of this document;
FIG. 7 is a flowchart illustrating the operation of a vehicle when MRM function is activated according to various embodiments of this document; and
FIG. 8 is a flowchart illustrating the operation of a vehicle of executing MRM according to various embodiments of this document.

### DETAILED DESCRIPTION OF THE INVENTION

Hereinafter, descriptions are made of the embodiments of this document in detail with reference to accompanying drawings.

The organization of this disclosure and its operational effects will be readily apparent from the detailed explanations provided below, facilitating a clear understanding. Before the detailed explanation in this document, it should be noted that the same reference numeral will be used for the same component whenever possible, even if displayed on different drawings, and that detailed descriptions of well-known components will be omitted to avoid obscuring the subject matter of this disclosure.

Before proceeding with the detailed explanation in this document, the terms used herein may be defined as follows.

A vehicle refers to a vehicle equipped with an automated driving system (ADS) capable of autonomous driving. For example, a vehicle may perform at least one of steering, acceleration, deceleration, lane changing, and stopping (or parking) without user intervention by the ADS. The ADS may include, for example, at least one of pedestrian detection and collision mitigation system (PDCMS), lane change decision aid system (LCDAS), lane departure warning system (LDWS), adaptive cruise control (ACC), lane keeping assistance system (LKAS), road boundary departure prevention system (RBDPS), curve speed warning system (CSWS), forward vehicle collision warning system (FVCWS), and low speed following (LSF).

A user, as a human utilizing the vehicle, may receive services from the autonomous driving system.

Vehicle control authority refers to the authority to control at least one component and/or function of the vehicle. At least one function of the vehicle may include, for example, at least one of steering function, acceleration function, deceleration function (or braking function), lane change function, lane detection function, lateral control function, obstacle detection and distance sensing function, powertrain control function, safe area detection function, engine on/off function, power on/off function, and vehicle locking/unlocking function. The listed vehicle functions are examples provided for illustrative purposes, and the embodiments of this document are not limited thereto.

A shoulder refers to the space between the outermost road boundary (or the boundary of the outermost lane) in the direction of travel of the vehicle and the road edge (e.g., curb, guardrail).

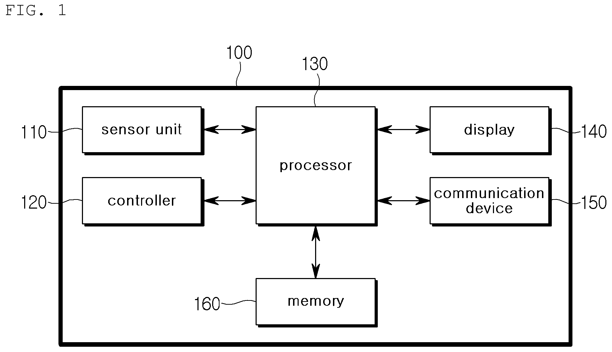

FIG. 1 is a block diagram illustrating a vehicle according to various embodiments of this document.

The configuration of the vehicle depicted in FIG. 1 is provided as an exemplary embodiment, and each component may be configured as one chip, one component, or one electronic circuit, or a combination of chips, components, and/or electronic circuits. According to an embodiment, some of the components shown in FIG. 1 may be separated into multiple components and configured as different chips, different components, or different electronic circuits, and some components may be combined to be configured as one chip, one component, or one electronic circuit. According to one embodiment, some components shown in FIG. 1 may be omitted, or other components not shown may be added.

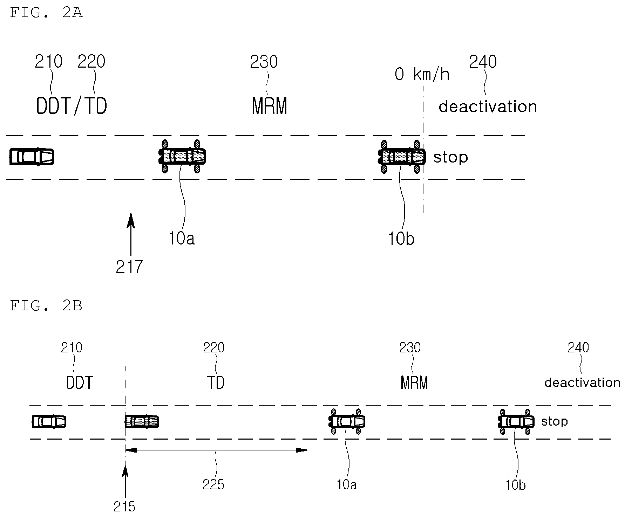

FIG. 2A is a diagram the operation of an autonomous vehicle in an event of a longitudinal fault at level 1 or 2 according to an embodiment, and FIG. 2B is a diagram illustrating the operation of an autonomous vehicle in an event of a longitudinal fault at levels 3 to 5 according to another embodiment.

The longitudinal fault level may be considered as an indication of the severity of a fault affecting longitudinal control, based on the severity of the fault. According to one embodiment, the longitudinal fault level may be defined from level 1 to level 5, where higher numbers indicate greater severity. For example, a longitudinal fault level 1 may be a fault level where the autonomous driving vehicle can maintain inter-vehicle distance similar to normal driving. On the other hand, a longitudinal fault level 5 may indicate a fault level where the autonomous driving vehicle is unable to decelerate, requiring user intervention for braking.

With reference to FIG. 1, the vehicle 100 may include a sensor unit 110, a controller 120, a processor 130, a display 140, a communication device 150, and memory 160.

According to various embodiments, the sensor unit 110 may detect the surrounding environment of the vehicle 100 using at least one sensor and generate data related to the surrounding environment based on the detection results. In an embodiment, the sensor unit 110 may acquire road information, information about objects around the vehicle (e.g., other vehicles, pedestrians, objects, curbs, guardrails, lanes, obstacles), and/or the vehicle's location information based on sensing data obtained from at least one sensor. Road information may include, for example, lane position, lane shape, lane color, lane type, number of lanes, presence of shoulders, or size of shoulders. Objects around the vehicle may include, for example, the position of objects, the size of objects, the shape of objects, the distance to objects, and the relative speed of objects.

According to an embodiment, the sensor unit 110 may include at least one of a camera, light detection and ranging (LiDAR), radio detection and ranging (RADAR), an ultrasonic sensor, an infrared sensor, and a position measurement sensor. The listed sensors are provided as examples for illustrative purposes only, and the sensors included in the sensor unit 110 of this document are not limited thereto. The camera may capture images around the vehicle to generate image data, including lanes and/or surrounding objects in the front, rear, and/or sides of the vehicle 100. The LiDAR may use light (or laser) to generate information about objects located in the front, rear, and/or sides of the vehicle 100. The radar may use electromagnetic waves (or radio waves) to generate information about objects located in the front, rear, and/or sides of the vehicle 100. The ultrasonic sensor may use ultrasonic waves to generate information about objects located in the front, rear, and/or sides of the vehicle 100. The infrared sensor may use infrared to generate information about objects located in the front, rear, and/or sides of the vehicle 100. The position measurement sensor may measure the current position of the vehicle. The position measurement sensor may include at least one of a global positioning system (GPS) sensor, a differential global positioning system (DGPS) sensor, and a global navigation satellite system (GNSS) sensor. The position measurement sensor may generate location data of the vehicle based on signals generated by at least one of the GPS sensor, DGPS sensor, and GNSS sensor.

According to various embodiments, the controller 120 may control the operation of at least one component of the vehicle 100 and/or at least one function of the vehicle under the control of the processor 130. At least one function may include, for example, steering function, acceleration function or longitudinal acceleration function, deceleration function or longitudinal deceleration function, brake function, lane change function, lane detection function, obstacle detection and distance detection function, lateral control function, powertrain control function, safe area detection function, engine on/off, power on/off, and at least one of locking/unlocking functions of the vehicle.

According to an embodiment, the controller 120 may control the operation of at least one component of the vehicle and/or at least one function of the vehicle for autonomous driving and/or minimal risk maneuver (MRM) of the vehicle 100 under the control of the processor 130. For example, the controller 120 may control the operation of at least one of the steering function, acceleration function, deceleration function, lane change function, lane detection function, lateral control function, obstacle detection and distance detection function, powertrain control function, and safe area detection function for minimal risk maneuver.

According to various embodiments, the processor 130 may control the overall operation of the vehicle 100. In an embodiment, the processor 130 may include an electrical control unit (ECU) capable of integratively controlling components within the vehicle 100. For example, the processor 130 may include a central processing unit (CPU) or micro processing unit (MCU) capable of performing computational tasks.

According to various embodiments, the processor 130 may activate advanced driver assistance systems (ADAS) upon occurrence of predetermined events, thereby controlling components within the vehicle 100 to enable autonomous driving. The predetermined events may occur when autonomous driving is requested by the user, when vehicle control authority is delegated by the user, or when conditions specified by the user and/or designer are satisfied.

According to various embodiments, the processor 130 may determine whether autonomous driving is possible based on at least one of the vehicle state information and surrounding environmental information during autonomous driving. When autonomous driving is determined to be impossible, the processor 130 may determine and control the execution of an MRM strategy. Here, the MRM strategy may include an MRM type.

With reference to FIG. 2A illustrating the behavior changes of an autonomous vehicle when a longitudinal fault event of level 1 or 2 occurs in the autonomous vehicle, the processor 130 may perform the dynamic driving task (DDT) function to autonomously drive the vehicle normally when autonomous driving is initiated and operating properly.

According to an embodiment, the processor 130 may monitor the mechanical and/or electrical status of the components within the vehicle (e.g., sensors, actuators, etc.) from the initiation of autonomous driving and the start of the DDT function, to acquire vehicle state information indicating whether mechanical and/or electrical faults occur in the internal components of the vehicle.

From the initiation of autonomous driving and the start of the DDT function, the processor 130 may utilize the sensor unit 110 and/or the communication device 150 to acquire environmental information surrounding the vehicle. According to an embodiment, the processor 130 may obtain road information at the location where the vehicle is traveling through the sensor unit 110, acquire map information from external devices (e.g., other vehicles or servers) through the communication device 150, and obtain road information at the location where the vehicle is traveling from the map information.

According to one embodiment, the processor 130 may acquire information about objects surrounding the vehicle (e.g., other vehicles, pedestrians, objects, curbs, guardrails, lanes, obstacles) through the sensor unit 110. For example, the processor 130 may obtain distance and relative speed for at least one vehicle located in the front, side, and/or rear of the vehicle.

According to an embodiment, the processor 130 may determine whether the functions required for autonomous driving are operating normally , based on the vehicle's state information. The functions necessary for autonomous driving may include at least one of, for example, lane detection, lane change, lateral control, deceleration (or brake control), powertrain control, safe area detection, and obstacle detection and distance sensing. The processor 130 may determine that normal autonomous driving is not possible when at least one of the functions necessary for autonomous driving cannot operate normally.

According to an embodiment, the processor 130 may determine whether the vehicle's state is suitable for normal operating conditions based on the vehicle state information. For example, the processor 130 may determine whether the mechanical state information of the vehicle, such as tire pressure information or engine overheating information, satisfies the requirements of normal operating conditions. Upon detecting that the vehicle's state does not meet the requirements of normal operating conditions, the processor 130 may determine that normal autonomous driving is impossible. For example, when the tire pressure is not suitable for driving or when the engine overheats, the processor 130 may determine that the vehicle cannot operate properly.

According to an embodiment, the processor 130 may also determine whether the surrounding environment meets the requirements of the operational design domain (ODD) for autonomous driving based on at least one piece of surrounding environmental information. The operational design domain represents the conditions under which autonomous driving operates effectively. Upon detecting that the surrounding environmental information does not meet the requirements of the ODD, the processor 130 may determine that normal autonomous driving is impossible.

Once it is determined that normal autonomous driving is impossible, the processor 130 may determine the longitudinal fault level corresponding to the detected fault.

According to an embodiment, when a fault such as sensor obstruction occurs, the processor 130 may determine whether the fault belongs to the longitudinal control fault and, specifically, at which level of longitudinal control fault, based on the fault response control strategy. When the processor 130 determines the fault as a longitudinal control fault, the vehicle's autonomous driving state may immediately transition from the DDT state 210 to the transition demand (TD) state 220, as shown in FIG. 2A. According to another embodiment, when the processor 130 finally determines that the fault is longitudinal fault of level 1 or 2, it may also transition the vehicle's autonomous driving state to the Transition Demand state 220.

According to an embodiment, for a vehicle operating at autonomous driving level 3, the vehicle may enter the transition demand state 220 when the longitudinal fault at level 1 or 2 occurs due to a predetermined expected event or an unexpected event.

According to another embodiment, for a vehicle operating at autonomous driving level 4, the processor 130 may monitor the user and request or enter the transition demand state 220 only when it is determined that a handover to the user is possible based on the monitoring information.

For example, when it is determined that the user is seated in the driver's seat based on weight and/or angle sensors of the seat or that the condition of the seat (e.g., angle) is suitable for driving, the processor 130 may consider the user as being in a handoverable state.

According to another embodiment, the processor 130 may consider the user as being in a handoverable state when it is determined, through gaze recognition and tracking using a camera, that the user seated in the driver's seat is paying attention to the front.

According to another embodiment, the processor 130 may determine that the user is in a state where handover is possible based on the vehicle state information indicating the user's capability to drive (e.g., not in a severe vehicle malfunction state), and when camera image analysis detects that the user is not holding any items (e.g., writing instruments, work materials, books, food, etc.), or perceivable auditory warnings are available to the user (e.g., not wearing headphones, watching media at a volume below a certain threshold, etc.).

In the example of FIG. 2A, when a vehicle autonomously driving in the DDT state detects a fault at a time point 215 and determines that the fault corresponds to longitudinal fault level 1 or 2, the vehicle's autonomous driving state may immediately transition from the DDT state 210 to the TD state 220.

In the TD state 220, when there is no user intervention to take over control within a predetermined period 225, the autonomous driving vehicle or processor 130 may transition from TD state 220 to MRM state 230 to initiate minimal risk maneuver (MRM) .

According to an embodiment, when the vehicle 100 is on a highway, the highway driving pilot (HDP) function may be activated, enabling control of the vehicle 100 in the DDT state 210, and when the user does not deactivate the activated HDP function within a predetermined period 225 in the TD state 220, the state may transition to the MRM state 230 to initiate minimal risk maneuver (MRM).

Meanwhile, according to the embodiment of FIG. 2B, when the processor 130 finally determines that the fault occurred in the vehicle corresponds to one of longitudinal fault levels 3 to 5 by the fault response control strategy, the processor 130 may immediately transition to the MRM state 230 to initiate minimal risk maneuver (MRM) regardless of whether the current autonomous driving state is in the DDT state 210 or TD state 220.

The processor 130 may determine the minimal risk maneuver (MRM) strategy once MRM is initiated.

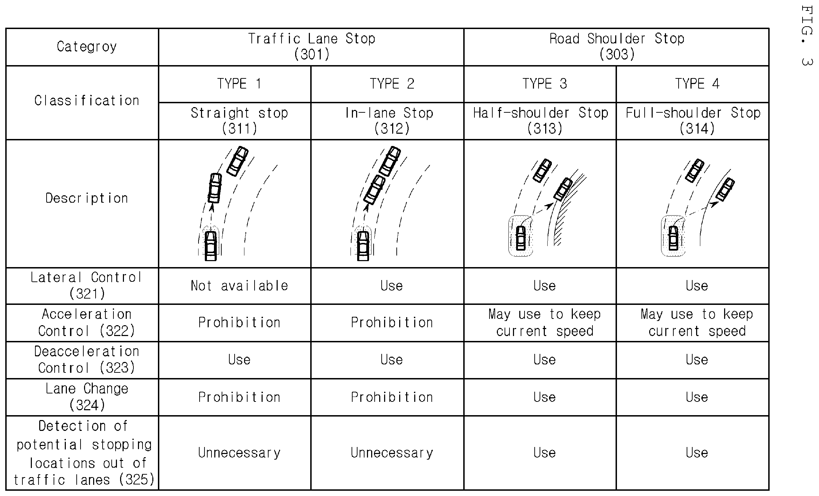

According to various embodiments, the processor 130 may select one of a plurality of MRM strategies once minimal risk operation is initiated. The MRM strategies may include four types as shown in FIG. 3. For example, the MRM strategies may include the traffic lane stop strategy 301 including types 1 and 2 and the road shoulder stop strategy 303 including types 3 and 4.

The lane stop strategy 301 may include straight stop 311 of type 1 and in-lane stop 312 of type 2. The road shoulder stop strategy 303 may include half-shoulder stop 313 of type 3 and full-shoulder stop 314 of type 4.

Type 1 straight stop 311 involves using only the deceleration control 323, which is a longitudinal deceleration function, without involving lateral control. For example, straight stop 311 may be performed in situations where lane detection is impossible or lateral control is impossible due to actuator failure. In type 1 straight stop 311, acceleration control 322 and lane change 324 are prohibited, and the function of detection of potential stopping locations out of traffic lane 325 may be unnecessary. Here, the detection of potential stopping locations out of traffic lane may refer to the function of detecting the positions of safe areas located outside traffic lanes, such as shoulders or rest areas.

Type 2 in-lane stop 312 refers to stopping within the boundaries of the lane the vehicle was traveling in. For example, in-lane stop 312 may mean stopping within the boundaries of the lane where the vehicle was traveling using lateral control 321 and/or deceleration control 323. The lane the vehicle was traveling in may refer to the lane being traveled at the time the need for minimal risk maneuvering is determined. During an in-lane stop 312, acceleration control 322 and lane change 324 are prohibited, and the function of detection of potential stopping locations out of traffic lane 325 may be unnecessary.

Type 3 half-shoulder stop 313 refers to stopping with a portion of the vehicle positioned on the shoulder of the road, and type 4 full-shoulder stop 314 refers to stopping when the entire vehicle positioned on the should of the road. During half-shoulder stop 313 and full-shoulder stop 314, the functions of lateral control 321, deceleration control 323, lane change 324, and detection of potential stopping locations outside the lane 325 may be utilized, while acceleration control 322 may be used only to maintain the current speed.

According to an embodiment, the priority of the aforementioned MRM types may be determined based on the road, surrounding environment, and the vehicle's fail-operational capability. For example, to minimize the risk during a stop, the priority of MRM types corresponding to road shoulder stop strategy 303 may be set higher than those corresponding to traffic lane stop strategy 301. Additionally, the priority of full-shoulder stop 313 may be set higher than half-shoulder stop 314, and the priority of in-lane stop 312 may be set higher than straight stop 311. That is, the priority of MRM types may be set to decrease in the order of full-shoulder stop 314, half-shoulder stop 313, in-lane stop 312, and straight stop 311.

According to various embodiments, the processor 130 may select an MRM strategy based on at least one of the vehicle state information and surrounding environmental information.

According to an embodiment, the processor 130 may determine the feasible MRM types among the described MRM types based on the vehicle state information, including the normally functioning and/or malfunctioning features necessary for autonomous driving. For example, when the function of lateral control 321 is operating normally, it may be determined that all MRM types, including straight stop 311, in-lane stop 312, half-shoulder stop 313, and full-shoulder stop 314, are feasible. In another example, when the function of lateral control 321 is not operating properly, it may be determined that straight stop 311 is feasible.

When there is only one feasible MRM type identified based on the vehicle state information, the processor 130 may determine the corresponding MRM type as the MRM strategy. For example, the processor 130 may determine straight stop 311 as the MRM strategy because only straight stop 311 is feasible in a situation where the function of lateral control 321 is not operating properly. In another example, the processor 130 may determine straight stop 311 as the MRM strategy because only straight stop 311 is feasible when the driving lane is not detected due to sensor failure and/or external environment.

When there are multiple feasible MRM types identified based on the vehicle state information, the processor 130 may determine the feasible MRM type within a specified minimum risk condition (MRC) range. According to an embodiment, the specified MRC range may be set and/or changed by the operator and/or the designer. According to an embodiment, the specified MRC range may be set differently depending on the vehicle performance, vehicle type, and/or external environment factors (e.g., weather, time, etc.).

According to an embodiment, the processor 130 may determine the feasible MRM type within the MRC range based on whether or not there is a shoulder within the specified MRC range. When there is no shoulder within the specified MRC range, the processor 130 may determine the feasible MRM type within the MRC range as lane stop 312 and straight stop 311.

When there is a shoulder within the specified MRC range, the processor 130 may determine the feasible MRM type within the MRC range based on the size of the shoulder. When the size of the shoulder within the specified MRC range is greater than or equal to the predetermined size, the processor 130 may determine the feasible MRM type within the MRC range as full shoulder stop 314, half shoulder stop 313, lane stop 312, and straight stop 311. The predetermined size may be determined based on the size of the vehicle. When the size of the shoulder is smaller than the predetermined size, the processor 130 may determine the feasible MRM type within the MRC range as half shoulder stop 313, lane stop 312, and straight stop 311.

According to various embodiments, when there are multiple executable MRM types within the specified MRC range, the processor 130 may select the final MRM strategy by considering priority and/or surrounding object information.

According to an embodiment, when there are multiple executable MRM types within the specified MRC range, the processor 130 may select the MRM type with the highest priority among the feasible MRM types within the specified MRC range as the final MRM strategy.

The processor 130 may control the controller 120 of the vehicle 100 to perform minimal risk maneuvers according to the determined MRM strategy.

When minimal risk maneuvering commences, the processor 130 may immediately activate the hazard lights to alert the surroundings and keep the hazard lights on until the maneuver is concluded. The hazard lights may only be deactivated by intentional user action (e.g., pressing the hazard light button).

When the user does not deactivate the autonomous driving function (e.g., HDP function), the processor 130 may control the vehicle to decelerate according to the determined MRM strategy to bring the vehicle to a stop.

The processor 130 may immediately terminate the minimal risk maneuver when the user deactivates the autonomous driving function during the minimal risk operation, allowing for a transition to user-driven mode.

In case of serious malfunctions or warnings during emergency maneuver (EM) operation that necessitate minimal risk maneuver execution, the processor 130 may commence the minimal risk maneuver after the imminent collision risk has been mitigated.

The autonomous driving functions executed by the processor 130 may maintain lane and inter-vehicle distance in both DDT state 210 and TD state 220, while in MRM state 230, the processor 130 may control the vehicle's speed to decelerate and ultimately bring the vehicle to a stop, ensuring minimal risk conditions.

Once the vehicle comes to a complete stop, the processor 130, responsible for autonomous driving functions, may engage the electric parking brake (EPB), shift the gear to the P position, verify that the vehicle remains stationary, deactivate the autonomous driving function (e.g., highway driving pilot (HDP)), and notify the user of the deactivation of the autonomous driving function.

Additionally, the processor 130 may display information related to autonomous driving, including minimal risk maneuvering, to both in-vehicle users and external stakeholders.

The processor 130 may display information for in-vehicle users on the in-vehicle display 140. According to an embodiment, the in-vehicle display 140 may include a head-up display (HUD) provided on the front windshield of the vehicle.

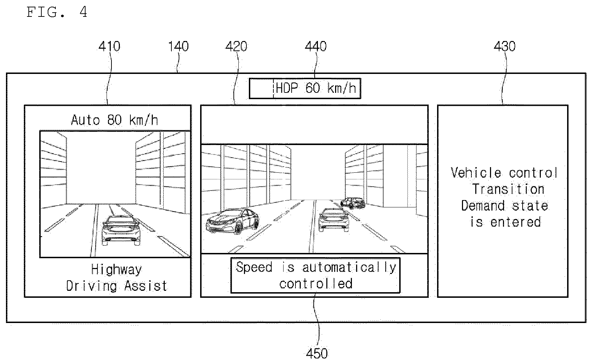

FIG. 4 is a diagram illustrating exemplary screen layout on a display when a highway driving pilot (HDP) function is activated.

The processor 130 may provide various screen layouts tailored to the activated autonomous driving functions. FIG. 4 shows an exemplary display screen layout when the highway driving pilot (HDP) function, which is an autonomous function feasible when the vehicle is driving on a highway, is activated. Unlike the screen layout in the embodiment of FIG. 4, each component composing the screen layout may be displayed on different display in other embodiments where there are multiple displays.

With reference to FIG. 4, the display screen may include an HUD screen 410. The HUD screen 410, displayed on the vehicle's front windshield, may show symbols indicating the operation of the highway driving pilot, auxiliary symbols for lane keeping, and other notifications and warning messages.

The display screen may include a driving assistance screen 420. The driving assistance screen 420 may display the road surface with distinguishable colors and display detected objects in their respective positions. Additionally, the driving assistance screen 420 may intuitively display the current driving status of the vehicle as executed by the highway driving pilot function.

The display screen may include a full pop-up screen 430. The full pop-up may display notifications such as activation/deactivation of the highway driving pilot and request user response to TD/MRM/EM states.

The display screen may include a driving assistance summary screen 440. The driving assistance summary screen 440 may display a brief overview of the highway autonomous driving status, showing a simplified view from the side of the vehicle and also displaying the vehicle's speed.

The display screen may include a mini-pop-up screen 450. The mini pop-up screen 450 may display the reason why activation cannot be activated when a request for autonomous driving execution is made, for example, when the user presses the button to activate the highway driving pilot (HDP) in a situation where activation is not possible. The mini pop-up screen 450 may also display the reason for the occurrence of the corresponding TD state or MRM state when the vehicle's autonomous driving status transitions to TD state or MRM state.

The processor 130 may use at least one display equipped inside the vehicle to provide information to the user. According to an embodiment, at least one display may be configured to provide the screen displayed in FIG. 4, as well as various other information.

The processor 130 may provide users with relevant information by displaying various screens on at least one display, tailored to different autonomous driving states.

According to an embodiment, in the case of transitioning the vehicle's autonomous driving status to TD state 220, the processor 130 may display a message directly requesting the user to take the direct control of the vehicle on the full pop-up screen 430 or an icon depicting a steering wheel and hand shape to request the user's intervention. Furthermore, the processor 130 may provide alerts to the user through auditory or haptic warnings. According to an embodiment, when the user does not deactivate the autonomous driving function (e.g., HDP function) within a predetermined period while in TD state 220, the processor 130 may escalate the warning level and generate corresponding warning sounds as time elapses. The processor 130 may also notify the user of the alert using lights. According to an embodiment, when the autonomous driving function (e.g., HDP function) is not deactivated within 4 seconds in TD state 220, the processor 130 may escalate the warning level.

The processor 130 may activate the hazard lights to notify external stakeholders when the vehicle comes to a stop during TD state 220 and a certain amount of time elapses without autonomous driving function (e.g., HDP function) being immediately deactivated. According to an embodiment, the hazard lights are not deactivated automatically but require intentional user intervention, such as pressing the hazard light button.

The processor 130 may enter the MRM state 230 and perform minimal risk maneuvers when the autonomous driving function (e.g., HDP function) is not deactivated within a predetermined period in the TD state 220, resulting in the vehicle being in a stopped state, which meets the minimal risk conditions.

After completing the minimal risk maneuver and the vehicle is in an emergency stop state, the full pop-up screen 430 may display a message indicating the vehicle is in the emergency stop state and requesting manual driving. As another approach, the processor 130 may display a steering wheel (which may differ in color from the steering wheel in the TD state) and a moving hand on the full pop-up screen 430 to indicate that the vehicle is in an emergency stop state and to request manual driving.

Along with transitioning to MRM state 230 via TD state 220, the processor 130 may display the reason for the transition to MRM state 230 on the mini pop-up screen 450, and additionally, provide an auditory warning or haptic warning similar to those in TD state 220. In this case, the auditory warning may be provided in a different warning sound from that indicating TD state 220.

According to an embodiment, in MRM state 230, the processor 130 may activate the rear lights to indicate to the external surroundings that the vehicle is currently in MRM state 230. According to another embodiment, the processor 130 may use lights other than the taillights or a separate display visible from the outside to indicate that the vehicle is in MRM state 230.

In addition, when the vehicle 100 has vehicle-to-everything (V2X) capabilities, allowing communication with surrounding vehicles or infrastructure via the communication device 150, the processor 130 may transmit messages or notifications containing location information indicating where the MRM has occurred to surrounding vehicles and/or infrastructure through the communication device 150 upon entering MRM state 230.

The above-described notification process may also be applied similarly when transitioning directly from DDT state 221 to MRM state 230.

When the vehicle comes to a stop and remains stationary due to user intervention or the completion of the minimal risk maneuver, identifying the end of the minimal risk maneuver, the processor 130 may automatically clear displayed notifications on the internal display and deactivate various auditory or tactile warnings. On the other hand, the processor 130 may maintain emergency light activation or displayed content on external displays intended for external notifications unless intervened by the user. For example, emergency lights may remain activated unless the user presses the emergency light button to turn them off. The indicators or notifications inside the vehicle that indicate the execution of the minimal risk maneuver are toggled on/off in conjunction with the initiation and completion of TD and MRM without requiring user intervention, while the emergency lights or taillights that indicate the execution of the minimal risk maneuver, or the display on the external display visible from outside the vehicle, are automatically turned on in conjunction with the 'MRM initiation' but not with the MRM completion, requiring user intervention.

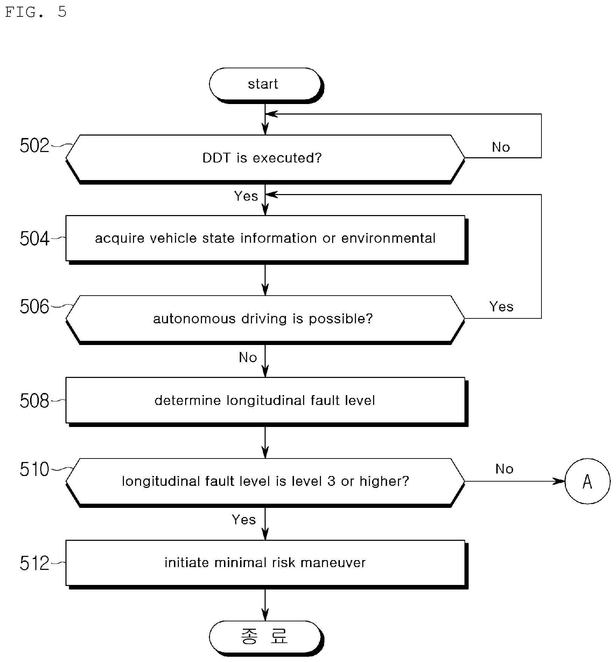

FIG. 5 is a flowchart illustrating the process of performing an MRM strategy in a vehicle according to various embodiments of this document. In the following embodiments, the respective operations may be performed sequentially, but they do not necessarily have to be performed in sequence. For example, the order of operations may be altered, and at least two operations may be simultaneously performed in parallel. Also, the operations may be performed by the processor 130 and/or at least one other component (e.g., sensor unit 110 and/or controller 120) equipped in the vehicle 100, or implemented as instructions executable by the processor 130 and/or at least one other component (e.g., sensor unit 110 and/or controller 120).

With reference to FIG. 5, the vehicle 100 determines in operation 502 whether the dynamic driving task (DDT) function, which autonomously drives the vehicle, is being executed. When the autonomous driving is initiated and operating normally, the vehicle 100 may perform the dynamic driving task (DDT) function.

Upon executing the DDT function, the vehicle 100 may acquire, in operation 504, vehicle state information or environmental information around the vehicle from the time the DDT function started with autonomous driving activated.

The vehicle state information indicates whether there are mechanical or electrical faults in the internal components (e.g., sensors, actuators, etc.) of the vehicle. The environmental information may include surrounding object information and lane information. The surrounding object information may include distance and relative speed for at least one vehicle located in the front, side, and/or rear of the vehicle.

In operation 506, the vehicle 100 determines whether normal autonomous driving is feasible based on the vehicle state information or environmental information. According to an embodiment, the processor 100 may determine whether the vehicle state satisfies normal operating conditions based on the vehicle state information. For example, when the tire pressure is not suitable for driving or when the engine overheats, the vehicle 100 may determine that the vehicle cannot operate properly. According to an embodiment, the vehicle 100 may also determine whether the surrounding environment meets the requirements of the operational design domain (ODD) for autonomous driving based on at least one piece of surrounding environmental information. Upon detecting that the surrounding environmental information does not meet the requirements of the ODD, the vehicle 100 may determine that normal autonomous driving is impossible.

Once it is determined that normal autonomous driving is impossible, the vehicle 100 may determine the longitudinal fault level corresponding to the detected fault in operation 508. The longitudinal fault level may be considered as an indication of the severity of a fault affecting longitudinal autonomous driving of the vehicle.

Longitudinal fault level 1 or 2 may correspond to situations where the vehicle cannot acquire the necessary information for autonomous driving. Longitudinal fault level 1 or 2 may correspond, for example, to situations such as sensor obstruction or malfunctions in sensors/cameras.

Longitudinal fault level 3 or higher may correspond to physical malfunctions related to the vehicle's operation. Longitudinal fault level 3 or higher may correspond, for example, to situations such as inadequate tire pressure for driving or engine overheating.

After determining the longitudinal fault level, the vehicle 100 may determine in operation 510 whether the determined longitudinal fault level is level 3 or higher. When it is determined that the fault is level 3 or higher, the vehicle 100 may initiate a minimal risk maneuver (MRM) in operation 512.

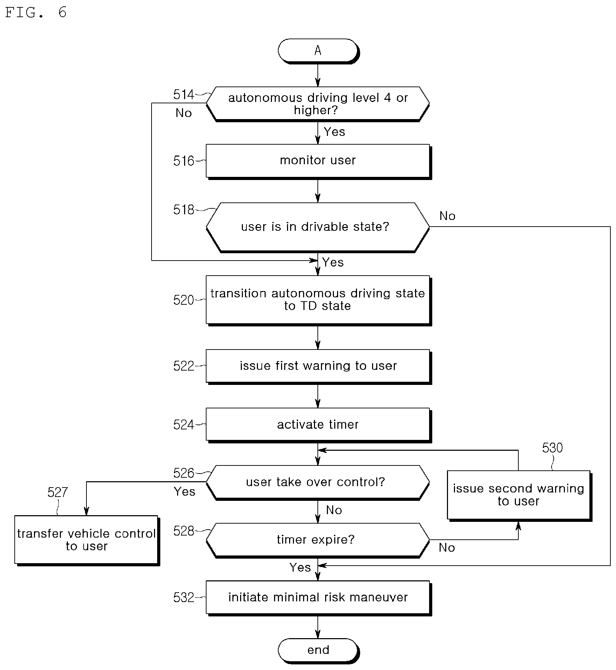

FIG. 6 is a flowchart illustrating the process of perform an MRM strategy in a vehicle according to various embodiments of this document.

When the fault corresponds to longitudinal fault level 2 or lower, the vehicle 100 then determines in operation 514 whether the vehicle is at autonomous driving level 4 or higher. When the vehicle is at autonomous driving level 4 or higher, the vehicle monitors the user in operation 518. The vehicle 100 determines in operation 518 whether the user is in a drivable state, i.e., whether the vehicle can hand over control to the user.

When it is determined that the user is unable to take over the control, the vehicle 100 initiates a minimal risk maneuver in operation 532.

When it is determined based on the monitoring information that the user can take over control of the vehicle, the vehicle 100 may transition, in operation 520, the vehicle state from DDT state to TD state where the vehicle 100 requests the user to take over control.

For example, when it is determined that the user is seated in the driver's seat based on weight and/or angle sensors of the seat or that the condition of the seat (e.g., angle) is suitable for driving, the vehicle 100 may consider the user as being in a handoverable state. According to another embodiment, the vehicle 100 may consider the user as being in a handoverable state when it is determined, through gaze recognition and tracking using a camera, that the user seated in the driver's seat is paying attention to the front.

According to another embodiment, the vehicle 100 may determine that the user is in a state where handover is possible when, through camera image analysis, it is determined that the user is not holding any items (e.g., writing instruments, work materials, books, food, etc.), or when the user is in a state where auditory warnings are perceivable (e.g., not wearing headphones, watching media at a volume below a certain threshold, etc.).

Furthermore, when it is determined in operation 514 that the vehicle is at autonomous driving level 3 or below, the vehicle may transition, in operation 520, the autonomous driving state from DDT state to TD state where the vehicle 100 requests the user to take over control.

Upon entering the TD state, the vehicle may provide or generate a first warning or notification to the user in operation 522. The first warning or notification is to prompt or urge the user to take over control of the vehicle because the vehicle's autonomous driving state is in the TD state. In this case, the user may take over control of the vehicle by deactivating the autonomous driving function, such as the highway driving pilot (HDP) function. The first warning or notification may include auditory alerts, seat belt haptic feedback, pop-up displays, or a combination of these.

With reference to FIG. 4, the vehicle 100 may prompt the user to take over manual control by displaying a message requesting manual driving on the full pop-up screen 430, or by displaying an icon on the full pop-up screen 430 showing a steering wheel or a hand shape. Additionally, the vehicle 100 may notify the user of the alert through auditory warnings or tactile feedback warnings. The auditory warnings may be realized, for example, through the occurrence of alert sounds. The tactile warnings may be realized, for example, through haptic feedback in the seat belt.

After the first warning or notification occurs, the vehicle 100 may activate a timer in operation 524 and determine in operation 524 whether the user takes over control of the vehicle. When the user takes over control of the vehicle, the vehicle 100 may transfer control of the vehicle to the user in operation 527.

When the user does not take over control of the vehicle, the vehicle 100 determines in operation 528 whether the timer expires and wait for the user to take over control until the timer expires. In this case, the vehicle 100 may continue autonomous driving while maintaining a predetermined distance from the vehicle in front until the user takes over control of the vehicle.

When the timer expires, the vehicle 100 may generate a second warning or notification to the user in operation 530. The second warning or notification may have a higher intensity than the first warning or notification.

For example, the second warning or notification may be executed in a manner different from the first warning or notification. In the case of auditory alerts, the sound of the second warning may have a higher sound level than that of the first warning or may have a different sound or content from the warning sound of the first warning. In the case of tactile warnings, the haptic feedback of the second warning on the seat belt may differ from that of the first warning. In the case of visual warnings, the display color of the first warning may differ from that of the second warning. The display color of the second warning may be a more intense color (e.g., red) compared to the display color of the first warning. The aforementioned second warning may occur one or more times until the timer expires. For example, the second warning may be performed at regular intervals, increasing the warning intensity.

According to an embodiment, when the autonomous driving function (e.g., HDP function) is not deactivated within 4 seconds in the TD state, i.e., when the user does not take over vehicle control, the vehicle may increase the warning level. As the warning level increases, auditory alerts may have a louder sound level, and seat belt haptic feedback may have a stronger intensity.

When the timer expires, the vehicle 100 may initiate a minimal risk maneuver in operation 532.

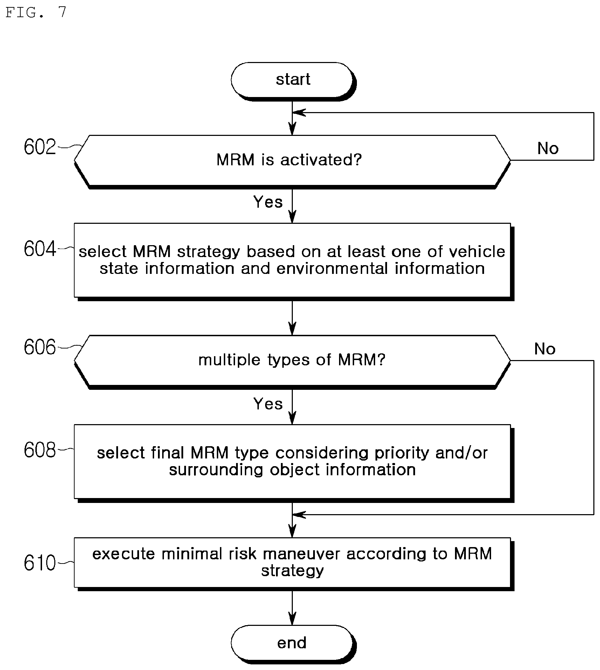

FIG. 7 is a flowchart illustrating the operation of a vehicle when MRM function is activated according to various embodiments of this document.

With reference to FIG. 7, the vehicle 100 determines in operation 602 whether the minimal risk maneuver is activated. When the minimal risk maneuver is activated, the vehicle 100 may select an MRM strategy based on at least one of the vehicle state information and surrounding environmental information in operation 604. In detail, the vehicle 100 may choose one of the plurality of minimal risk maneuver strategies available.

The MRM strategies may include four types as shown in FIG. 3. For example, the MRM strategies may include the traffic lane stop strategy 301 including types 1 and 2 and the road shoulder stop strategy 303 including types 3 and 4. The lane stop strategy 301 may include straight stop 311 of type 1 and in-lane stop 312 of type 2. The road shoulder stop strategy 303 may include half-shoulder stop 313 of type 3 and full-shoulder stop 314 of type 4.

Next, the vehicle 100 determines in operation 606 whether there are multiple types of minimal risk maneuvers within the selected MRM strategy. When there are multiple types of minimal risk maneuvers, the vehicle 100 may select the final MRM type in operation 608 by considering priorities and/or surrounding object information.

When there is only one feasible MRM type identified based on the vehicle state information, the processor 100 may determine the corresponding MRM type as the MRM strategy. For example, the vehicle 100 may determine straight stop 311 as the MRM strategy because only straight stop 311 is feasible in a situation where the function of lateral control 321 is not operating properly.

In addition, the vehicle 100 may determine feasible MRM types among the aforementioned MRM types based on the vehicle state information, including the normally functioning and/or malfunctioning features necessary for autonomous driving.

Once the final MRM type is selected, the vehicle may execute minimal risk maneuvers according to the MRM strategy in operation 610.

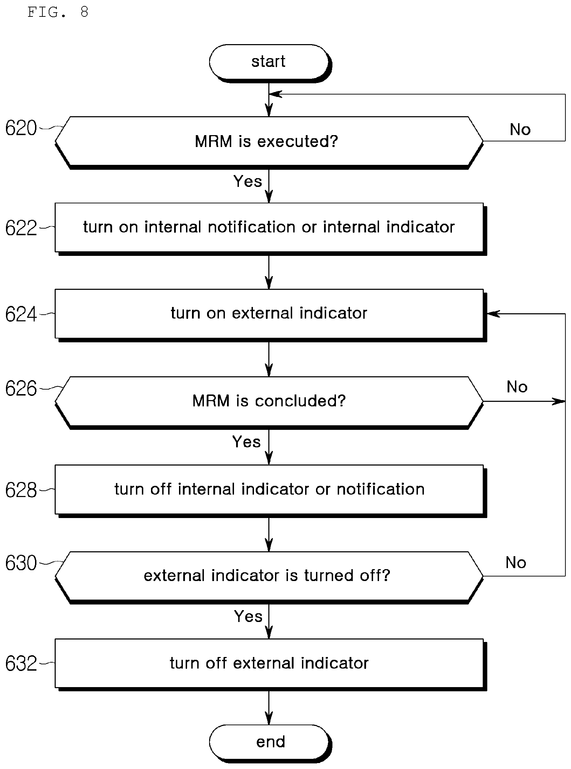

FIG. 8 is a flowchart illustrating the operation of a vehicle of executing MRM according to various embodiments of this document.

With reference to FIG. 8, the vehicle 100 may determine in operation 620 whether the minimal risk maneuver is executed. When the minimal risk maneuver is executed, the vehicle 100 may turn on an internal indicator or notification in operation 622 to indicate that the MRM is in progress.

Next, the vehicle 100 may turn on an external indicator in operation 624. The external indicator may, for example, be the emergency lights of the vehicle 100, but the embodiments of this document are not limited thereto.

Accordingly, other vehicles around the vehicle 100 may perceive that the vehicle 100 is in an MRM state.

Although not shown in the drawing, when MRM is activated, the vehicle 100 may perform braking to reduce the vehicle's speed within the lane at a consistent deceleration rate to minimize collision with surrounding vehicles or obstacles, including those in the rear. Therefore, when MRM is activated, the vehicle 100 may come to a stop after a certain period of time.

After turning on the external indicators, the vehicle 100 determines in operation 626 whether the MRM is concluded. The MRM may be concluded when the vehicle 100 comes to a stop. Alternatively, the MRM may be terminated when the user of the vehicle manually ends the MRM or takes control of the vehicle (e.g., by deactivating the HDP). The user taking control of the vehicle may include selecting a soft button or physical button to deactivate the HDP, or physically operating the braking system of the vehicle.

When the MRM is terminated, the vehicle 100 may turn off internal notifications or indicators indicating that the MRM is in progress. In other words, in the event of user intervention, or when the MRM has been normally terminated, the vehicle 100 may automatically clear the notifications displayed on the internal display, and may also deactivate various acoustic or tactile alerts. In this case, the vehicle 100 may identify that the MRM is normally terminated when the vehicle 100 is stopped and the vehicle 100 remains stopped. Stopping of the vehicle 100 means, for example, that the vehicle 100 remains stationary for a predetermined period of time.

Subsequently, in operation 630, the vehicle 100 may determine whether the external indicators are turned off by the user. In detail, the vehicle 100 maintains the external indicators in the turned-on state unless the user selects a soft button or physical button to turn off the external indicators. When the user selects a soft button or physical button to turn off the external indicators, the vehicle 100 turns off the external indicators in operation 632. In this case, the vehicle 100 may maintain emergency light activation or displayed content on an external display intended for external notifications unless intervened by the user. For example, emergency lights may remain activated unless the user presses the emergency light button to turn them off.

That is, internal displays/notifications are turned on/off based on the initiation and termination of TD and/or MRM, but external indicators remain on unless the user, or driver, manipulates the turn-off function for the external indicators.

According to various embodiments of this document, a vehicle performing a minimum risk maneuver during autonomous driving is capable of minimize risk and enhance safety by clearly informing both external stakeholders and internal users of the situation and changes in the situation.

According to various embodiments of this document, a vehicle performing a minimum risk maneuver during autonomous driving is capable of minimize risk and enhance safety by clearly informing both external stakeholders and internal users of the situation and changes in the situation.

## Claims

1. An autonomous driving vehicle (100) comprising:
at least one sensor (110) configured to detect surrounding environment of the vehicle (100) to generate surrounding environmental information;
a processor (130) configured to monitor the status of the vehicle (100) to generate vehicle state information and control autonomous driving of the vehicle (100); and
a controller (120) configured to control the operation of the vehicle (100) under the control of the processor (130),
wherein the processor (130) detects whether a minimal risk maneuver is required based on at least one of the surrounding environmental information and the vehicle state information during autonomous driving of the vehicle (100), executes the minimal risk maneuver based on a minimal risk maneuver being required, provides a user inside the vehicle (100) with an indication and alert in association with initiation and termination of the minimal risk maneuver, turns on an external indicator indicating the execution of the minimal risk maneuver based on the execution of the minimal risk maneuver, and turns off the external indicator based on user manipulation of an external indicator button,
wherein the processor (130) determines whether to execute the minimal risk maneuver after the vehicle (100) transitions through a transition demand (TD) state or immediately based on the minimal risk maneuver being required,
when it is determined to execute the minimal risk maneuver via the TD state: the processor (130) determines the autonomous driving level of the vehicle (100), monitors the user based on the autonomous driving level of the vehicle (100) being equal to or higher than level 4, and transitions the vehicle (100) to the TD state based on the user being in a drivable state as the monitoring result.

2. The vehicle (100) of claim 1, wherein the processor (130), upon the vehicle (100) transitioning to the TD state, provides the user with a first notification requesting the transfer of control of the vehicle (100) to the driver.

3. The vehicle (100) of claim 2, wherein the processor (130), after a predetermined time elapses since the provision of first notification, provides the user with a second notification requesting the transfer of control of the vehicle (100) to the user,
wherein the second notification has a stronger notification intensity compared to the first notification.

4. The vehicle (100) of any one of claims 1 to 3, wherein the processor (130) determines to execute the minimal risk maneuver via the TD state based on failing acquisition of the information necessary for autonomous driving of the vehicle (100), and determines to execute the minimal risk maneuver immediately based on detecting a physical malfunction related to the autonomous driving of the vehicle (100).

5. The vehicle (100) of any one of the preceding claims, wherein the processor (130) determines whether the minimal risk maneuver is terminated and automatically clears the indication and the alert when the minimal risk maneuver is normally terminated.

6. The vehicle (100) of claim 5, wherein the processor (130) determines that the minimal risk maneuver is terminated when the vehicle (100) has stopped and remains stationary.

7. A method of operating an autonomous driving vehicle (100), the method comprising:
detecting whether a minimal risk maneuver is required based on at least one of surrounding environmental information and vehicle state information during autonomous driving of the vehicle (100);
determining whether to execute the minimal risk maneuver after the vehicle (100) transitions through a transition demand (TD) state or immediately based on the minimal risk maneuver being required;
when it is determined to execute the minimal risk maneuver via the TD state:
determining the autonomous driving level of the vehicle (100);
monitoring the user based on the autonomous driving level of the vehicle (100) being equal to or higher than level 4; and
transitioning the vehicle (100) to the TD state based on the user being in a drivable state as the monitoring result;
executing the minimal risk maneuver based on a minimal risk maneuver being required;
providing a user inside the vehicle (100) with an indication and alert in association with initiation and termination of the minimal risk maneuver;
turning on an external indicator indicating the execution of the minimal risk maneuver based on the execution of the minimal risk maneuver; and
turning off the external indicator based on user manipulation of an external indicator button.

8. The method of claim 7, further comprising providing, upon the vehicle (100) transitioning to the TD state, the user with a first notification requesting the transfer of control of the vehicle (100) to the driver.

9. The method of claim 8, further comprising providing, after a predetermined time elapses since the provision of first notification, the user with a second notification requesting the transfer of control of the vehicle (100) to the user,
wherein the second notification has a stronger notification intensity compared to the first notification.

10. The method of any one of claims 7 to 9, wherein the determining of whether to execute the minimal risk maneuver after the vehicle (100) transitions through a transition demand (TD) state or immediately comprises determining to execute the minimal risk maneuver via the TD state based on failing acquisition of the information necessary for autonomous driving of the vehicle (100).

11. The method of any one of claims 7 to 10, wherein the determining of whether to execute the minimal risk maneuver after the vehicle (100) transitions through a transition demand (TD) state or immediately comprises determining to execute the minimal risk maneuver immediately based on detecting a physical malfunction related to the autonomous driving of the vehicle (100).

12. The method of any one of claims 7 to 11, further comprising:
determining whether the minimal risk maneuver is terminated; and
automatically clearing the indication and the alert when the minimal risk maneuver is terminated.

13. The method of claim 12, wherein the determining whether the minimal risk maneuver is terminated includes determining that the minimal risk maneuver is terminated when the vehicle (100) has stopped and remains stationary.

## Patentansprüche

1. Autonom fahrendes Fahrzeug (100), umfassend:
mindestens einen Sensor (110), der konfiguriert ist, um die umgrenzende Umgebung des Fahrzeugs (100) zu detektieren, um umgrenzende Umgebungsinformationen zu erzeugen;
einen Prozessor (130), der konfiguriert ist, um den Zustand des Fahrzeugs (100) zu überwachen, um Fahrzeugzustandsinformationen zu erzeugen und das autonome Fahren des Fahrzeugs (100) zu steuern; und
eine Steuereinheit (120), die konfiguriert ist, um den Betrieb des Fahrzeugs (100) unter der Steuerung des Prozessors (130) zu steuern,
wobei der Prozessor (130) basierend auf mindestens einer der umgrenzenden Umgebungsinformationen und der Fahrzeugzustandsinformationen während des autonomen Fahrens des Fahrzeugs (100) detektiert, ob ein Manöver mit minimalem Risiko erforderlich ist, das Manöver mit minimalem Risiko ausführt, basierend darauf, dass ein Manöver mit minimalem Risiko erforderlich ist, einem Benutzer innerhalb des Fahrzeugs (100) eine Angabe und eine Warnung in Assoziation mit der Initiierung und Beendigung des Manövers mit minimalem Risiko bereitstellt, einen externen Indikator einschaltet, der die Ausführung des Manövers mit minimalem Risiko basierend auf der Ausführung des Manövers mit minimalem Risiko anzeigt, und den externen Indikator basierend auf der Benutzerbetätigung einer externen Indikatortaste ausschaltet,
wobei der Prozessor (130) basierend darauf, dass das Manöver mit minimalem Risiko erforderlich ist, bestimmt, ob das Manöver mit minimalem Risiko ausgeführt werden soll, nachdem das Fahrzeug (100) durch einen Überführungsanforderungs- (TD) -Zustand überführt oder sofort,
wenn bestimmt wird, dass das Manöver mit minimalem Risiko über den TD-Zustand ausgeführt werden soll: der Prozessor (130) den Level des autonomen Fahrens des Fahrzeugs (100) bestimmt, den Benutzer basierend darauf, dass der Level des autonomen Fahrens des Fahrzeugs (100) gleich oder höher als Level 4 ist, überwacht, und das Fahrzeug (100) in den TD-Zustand basierend darauf, dass der Benutzer sich in einem fahrbaren Zustand als Überwachungsergebnis befindet, überführt.

2. Fahrzeug (100) nach Anspruch 1, wobei der Prozessor (130) beim Überführen des Fahrzeugs (100) in den TD-Zustand dem Benutzer eine erste Benachrichtigung bereitstellt, die die Übertragung der Steuerung des Fahrzeugs (100) an den Fahrer anfordert.

3. Fahrzeug (100) nach Anspruch 2, wobei der Prozessor (130) nach Ablaufen einer vorbestimmten Zeit seit der Bereitstellung der ersten Benachrichtigung dem Benutzer eine zweite Benachrichtigung bereitstellt, die die Übertragung der Steuerung des Fahrzeugs (100) an den Benutzer anfordert,
wobei die zweite Benachrichtigung eine stärkere Benachrichtigungsintensität im Vergleich zur ersten Benachrichtigung aufweist.

4. Fahrzeug (100) nach einem der Ansprüche 1 bis 3, wobei der Prozessor (130) basierend auf der fehlgeschlagenen Erfassung der für das autonome Fahren des Fahrzeugs (100) notwendigen Informationen bestimmt, das Manöver mit minimalem Risiko über den TD-Zustand auszuführen, und basierend auf Detektieren einer physikalischen Fehlfunktion, die das autonome Fahren des Fahrzeugs (100) betrifft, bestimmt, das Manöver mit minimalem Risiko sofort auszuführen.

5. Fahrzeug (100) nach einem der vorstehenden Ansprüche, wobei der Prozessor (130) bestimmt, ob das Manöver mit minimalem Risiko beendet ist und die Angabe und die Warnung automatisch löscht, wenn das Manöver mit minimalem Risiko normal beendet ist.

6. Fahrzeug (100) nach Anspruch 5, wobei der Prozessor (130) bestimmt, dass das Manöver mit minimalem Risiko beendet ist, wenn das Fahrzeug (100) gestoppt hat und stationär bleibt.

7. Verfahren zum Betreiben eines autonom fahrenden Fahrzeugs (100), wobei das Verfahren Folgendes umfasst:
Detektieren, ob während des autonomen Fahrens des Fahrzeugs (100) ein Manöver mit minimalem Risiko erforderlich ist, basierend auf mindestens einer der umgrenzenden Umgebungsinformationen und den Fahrzeugzustandsinformationen;
Bestimmen, ob das Manöver mit minimalem Risiko ausgeführt werden soll, nachdem das Fahrzeug (100) durch einen Überführungsanforderungs- (TD) -Zustand überführt wurde, oder sofort, basierend darauf, dass das Manöver mit minimalem Risiko erforderlich ist;
wenn bestimmt wird, dass das Manöver mit minimalem Risiko über den TD-Zustand ausgeführt werden soll:
Bestimmen des Levels des autonomen Fahrens des Fahrzeugs (100);
Überwachen des Benutzers basierend auf dem Level des autonomen Fahrens des Fahrzeugs (100), der gleich oder höher als Level 4 ist; und
Überführen des Fahrzeugs (100) in den TD-Zustand basierend darauf, dass sich der Benutzer in einem fahrbaren Zustand befindet, als Überwachungsergebnis;
Ausführen des Manövers mit minimalem Risiko basierend darauf, dass ein Manöver mit minimalem Risiko erforderlich ist;
Bereitstellen einer Angabe und einer Warnung für einen Benutzer innerhalb des Fahrzeugs (100) in Assoziation mit Initiation und Beenden des Manövers mit minimalem Risiko;
Einschalten eines externen Indikators, der die Ausführung des Manövers mit minimalem Risikos basierend auf der Ausführung des Manövers mit minimalem Risikos angibt; und
Ausschalten des externen Indikators basierend auf der Benutzerbetätigung einer externen Indikatortaste.

8. Verfahren nach Anspruch 7, weiter umfassend Bereitstellen, wenn das Fahrzeug (100) in den TD-Zustand überführt, einer ersten Benachrichtigung für den Benutzer, die die Übertragung der Steuerung des Fahrzeugs (100) an den Fahrer anfordert.

9. Verfahren nach Anspruch 8, weiter umfassend Bereitstellen, nachdem eine vorbestimmte Zeit seit der Bereitstellung der ersten Benachrichtigung verstrichen ist, einer zweiten Benachrichtigung für den Benutzer, die die Übertragung der Steuerung des Fahrzeug (100) an den Benutzer anfordert,
wobei die zweite Benachrichtigung eine stärkere Benachrichtigungsintensität im Vergleich zur ersten Benachrichtigung aufweist.

10. Verfahren nach einem der Ansprüche 7 bis 9, wobei das Bestimmen, ob das Manöver mit minimalem Risiko nach Überführen des Fahrzeugs (100) durch einen Überführungsanforderungs- (TD) -Zustand oder sofort auszuführen ist, Bestimmen umfasst, das Manöver mit minimalem Risiko über den TD-Zustand auszuführen, basierend auf der fehlgeschlagenen Erfassung der für das autonome Fahren des Fahrzeugs (100) notwendigen Informationen.

11. Verfahren nach einem der Ansprüche 7 bis 10, wobei das Bestimmen, ob das Manöver mit minimalem Risiko nach Überführen des Fahrzeugs (100) durch einen Überführungsanforderungs- (TD) -Zustand oder sofort ausgeführt werden soll, Bestimmen umfasst, das Manöver mit minimalem Risiko sofort auszuführen, basierend auf Detektieren einer physikalischen Fehlfunktion, die das autonome Fahren des Fahrzeugs (100) betrifft.

12. Verfahren nach einem der Ansprüche 7 bis 11, weiter umfassend:
Bestimmen, ob das Manöver mit minimalem Risiko beendet ist; und
automatisches Löschen der Angabe und der Warnung, wenn das Manöver mit minimalem Risiko beendet ist.

13. Verfahren nach Anspruch 12, wobei das Bestimmen, ob das Manöver mit minimalem Risiko beendet ist, Bestimmen einschließt, dass das Manöver mit minimalem Risiko beendet ist, wenn das Fahrzeug (100) gestoppt hat und stationär bleibt.

## Revendications

1. Véhicule (100) à conduite autonome comprenant :
au moins un capteur (110) configuré pour détecter l'environnement entourant le véhicule (100) afin de générer des informations relatives à cet environnement ;
un processeur (130) configuré pour surveiller l'état du véhicule (100) afin de générer des informations relatives à l'état du véhicule et contrôler la conduite autonome du véhicule (100) ; et
un contrôleur (120) configuré pour contrôler le fonctionnement du véhicule (100) sous le contrôle du processeur (130),
dans lequel le processeur (130) détecte si une manœuvre à risque minimal est requise sur la base d'au moins l'une parmi des informations relatives à l'environnement du véhicule et des informations relatives à l'état du véhicule pendant la conduite autonome du véhicule (100), et exécute la manœuvre à risque minimal sur la base du fait qu'une manœuvre à risque minimal est requise, fournit à un utilisateur à l'intérieur du véhicule (100) une indication et une alerte en association avec le début et la fin de la manœuvre à risque minimal, allume un indicateur externe indiquant l'exécution de la manœuvre à risque minimal sur la base de l'exécution de la manœuvre à risque minimal et éteint l'indicateur externe sur la base de la manipulation par l'utilisateur d'un bouton d'indicateur externe,
dans lequel le processeur (130) détermine s'il faut exécuter la manœuvre à risque minimal après que le véhicule (100) est passé par un état de demande de transition (TD) ou immédiatement sur la base du fait que la manœuvre à risque minimal est requise,
lorsqu'il est déterminé qu'il faut exécuter la manœuvre à risque minimal via l'état de TD : le processeur (130) détermine le niveau de conduite autonome du véhicule (100), surveille l'utilisateur sur la base du fait que le niveau de conduite autonome du véhicule (100) est égal ou supérieur au niveau 4, et fait passer le véhicule (100) à l'état de TD sur la base du fait que l'utilisateur est dans un état d'aptitude à la conduite en tant que résultat de la surveillance.

2. Véhicule (100) selon la revendication 1, dans lequel le processeur (130), lorsque le véhicule (100) passe à l'état de TD, fournit à l'utilisateur une première notification demandant le transfert de contrôle du véhicule (100) au conducteur.

3. Véhicule (100) selon la revendication 2, dans lequel le processeur (130), après qu'un temps prédéterminé s'est écoulé depuis la fourniture de la première notification, fournit à l'utilisateur une seconde notification demandant le transfert de contrôle du véhicule (100) à l'utilisateur,
dans lequel la seconde notification a une intensité de notification plus forte que celle de la première notification.

4. Véhicule (100) selon l'une quelconque des revendications 1 à 3, dans lequel le processeur (130) détermine qu'il faut exécuter la manœuvre à risque minimal via l'état de TD sur la base de l'échec de l'acquisition des informations nécessaires à la conduite autonome du véhicule (100), et détermine qu'il faut exécuter la manœuvre à risque minimal immédiatement sur la base de la détection d'un dysfonctionnement physique lié à la conduite autonome du véhicule (100).

5. Véhicule (100) selon l'une quelconque des revendications précédentes, dans lequel le processeur (130) détermine si la manœuvre à risque minimal est terminée et efface automatiquement l'indication et l'alerte lorsque la manœuvre à risque minimal est normalement terminée.

6. Véhicule (100) selon la revendication 5, dans lequel le processeur (130) détermine que la manœuvre à risque minimal est terminée lorsque le véhicule (100) s'est arrêté et reste immobile.

7. Procédé de fonctionnement d'un véhicule (100) à conduite autonome, le procédé comprenant :
le fait de détecter si une manœuvre à risque minimal est requise sur la base d'au moins l'une parmi des informations relatives à l'environnement autour du véhicule et des informations relatives à l'état de véhicule pendant la conduite autonome du véhicule (100) ;
le fait de déterminer s'il faut exécuter la manœuvre à risque minimal après que le véhicule (100) est passé par un état de demande de transition (TD) ou immédiatement sur la base du fait que la manœuvre à risque minimal est requise ;
lorsqu'il est déterminé qu'il faut exécuter la manœuvre à risque minimal via l'état de TD :
la détermination du niveau de conduite autonome du véhicule (100) ;
la surveillance de l'utilisateur sur la base du fait que le niveau de conduite autonome du véhicule (100) est égal ou supérieur au niveau 4 ; et
le passage du véhicule (100) à l'état de TD sur la base du fait que l'utilisateur est dans un état d'aptitude à la conduite en tant que résultat de la surveillance ;
l'exécution de la manœuvre à risque minimal sur la base du fait qu'une manœuvre à risque minimal est requise ;
le fait de fournir à un utilisateur à l'intérieur du véhicule (100) une indication et une alerte en association avec le début et la fin de la manœuvre à risque minimal ;
l'allumage d'un indicateur externe indiquant l'exécution de la manœuvre à risque minimal sur la base de l'exécution de la manœuvre à risque minimal ; et
l'extinction de l'indicateur externe sur la base d'une manipulation par l'utilisateur d'un bouton d'indicateur externe.

8. Procédé selon la revendication 7, comprenant en outre le fait de fournir, lorsque le véhicule (100) passe à l'état de TD, une première notification à l'utilisateur demandant le transfert de contrôle du véhicule (100) au conducteur.

9. Procédé selon la revendication 8, comprenant en outre le fait de fournir, après l'écoulement d'un temps prédéterminé depuis la fourniture de la première notification, une seconde notification à l'utilisateur demandant le transfert de contrôle du véhicule (100) à l'utilisateur,
dans lequel la seconde notification a une intensité de notification plus forte que celle de la première notification.

10. Procédé selon l'une quelconque des revendications 7 à 9, dans lequel le fait de déterminer s'il faut exécuter la manœuvre à risque minimal après que le véhicule (100) a passé par un état de demande de transition (TD) ou immédiatement comprend le fait de déterminer qu'il faut exécuter la manœuvre à risque minimal via l'état de TD sur la base de l'échec de l'acquisition des informations nécessaires à la conduite autonome du véhicule (100).

11. Procédé selon l'une quelconque des revendications 7 à 10, dans lequel le fait de déterminer s'il faut exécuter la manœuvre à risque minimal après que le véhicule (100) est passé par un état de demande de transition (TD) ou immédiatement comprend le fait de déterminer qu'il faut exécuter la manœuvre à risque minimal immédiatement sur la base de la détection d'un dysfonctionnement physique lié à la conduite autonome du véhicule (100).

12. Procédé selon l'une quelconque des revendications 7 à 11, comprenant en outre :
le fait de déterminer si la manœuvre à risque minimal est terminée ; et
l'effacement automatique de l'indication et de l'alerte lorsque la manœuvre à risque minimal est terminée.

13. Procédé selon la revendication 12, dans lequel le fait de déterminer si la manœuvre à risque minimal est terminée inclut le fait de déterminer que la manœuvre à risque minimal est terminée lorsque le véhicule (100) s'est arrêté et reste immobile.
